# EUROPEAN PATENT APPLICATION

(11) **EP 4 822 139 A2**
(43) Date of publication of application: **14.10.2026**
(21) Application number: 26202389.8
(22) Date of filing: 11.07.2022
(51) Int. Cl.: F01D 5/04

(54) **RADIAL FLOW TURBINE ROTOR WITH INTERNAL FLUID COOLING**

(30) Priority: 09.07.2021 US 202117371543
(62) Document number(s) of the earlier application(s) in accordance with Art. 76 EPC: 22184219.8 / 4 116 541
(71) Applicant: RTX Corporation, Farmington, CT 06032 (US)
(72) Inventor: BELOTTO, Daniel, Palm Beach Gardens, 33418 (US); FOWLER, Robert B., Jupiter, 33458 (US); SPANGLER, Brandon W., Vernon, 06066 (US); PAULINO, Jose R., Jupiter, 33478 (US)
(74) Representative: Dehns

(57) **Abstract**

A manufacturing method is provided that includes forming a radial flow turbine blade (60) of a radial flow turbine rotor (40) for a gas turbine engine (20). The radial flow turbine blade (60) includes an internal cooling passage (86). At least a portion of the internal cooling passage (86) has a passage thickness of less than 20 mils (0.5 1mm).

## Description

### BACKGROUND OF THE DISCLOSURE

### 1. Technical Field

This disclosure (invention) relates generally to a turbine engine and, more particularly, to a radial flow turbine rotor for a turbine engine.

### 2. Background Information

A gas turbine engine includes a compressor section, a combustor section and a turbine section. Some gas turbine engines may be configured with an axial flow turbine rotor, where combustion product flow generally axially through the turbine section. Other generally smaller gas turbine engines may be configured with a radial flow turbine rotor, where combustion products flow radially into the turbine section, are turned by the radial flow turbine rotor, and flow generally axially out of the turbine section. While known radial flow turbine rotors have various advantages, there is still room in the art for improvement. There is a need in the art, for example, for a relatively small radial flow turbine rotor which can withstand relatively high turbine section inlet temperatures.

### SUMMARY OF THE DISCLOSURE

According to an aspect of the present invention, a manufacturing method is provided that includes forming a radial flow turbine blade of a radial flow turbine rotor for a gas turbine engine. The radial flow turbine blade includes an internal cooling passage. At least a portion of the internal cooling passage has a passage thickness of less than 20 mils (0.51mm).

According to another aspect of the present invention, another manufacturing method is provided. During this method, a refractory metal core is provided. The refractory metal core is configured within a shell. Liquid material is directed into a void between the shell and the refractory metal core to at least partially form a radial flow turbine blade for a radial flow turbine rotor in a gas turbine engine. The refractory metal core is removed from the radial flow turbine blade to form an internal cooling passage within the radial flow turbine blade.

According to still another aspect of the present disclosure, a radial flow turbine rotor is provided for a radial flow turbine of a gas turbine engine. This radial flow turbine rotor includes a rotor hub and a plurality of radial flow turbine blades. The radial flow turbine blades are arranged circumferentially about and connected to the rotor hub. The radial flow turbine blades include a first radial flow turbine blade. The first radial flow turbine blade includes an internal cooling passage. At least a portion of the internal cooling passage has a passage thickness of less than 20 mils (0.51mm).

The following optional features may be applied to any of the above aspects.

At least a portion of the internal cooling passage may have a passage thickness of less than 15 mils (0.381mm).

The rotor hub and the plurality of radial flow turbine blades may be formed together as a monolithic body.

The internal cooling passage may extend within at least a portion of the first radial flow turbine blade with a blade thickness between 30 mils (0.76mm) and 60 mils (1.5mm).

The passage thickness may be between 5 mils (0.13mm) and 15 mils (0.38mm).

The internal cooling passage may extend within at least a portion of the radial flow turbine blade with a blade thickness of less than 60 mils (1.5mm).

The blade thickness may be between 30 mils (0.76mm) and 60 mils (1.5mm).

The forming of the radial flow turbine blade may include casting the radial flow turbine blade with the internal cooling passage.

The casting of the radial flow turbine blade may include: configuring a refractory metal core within a shell; and filling a void between the refractory metal core and the shell to at least partially form the radial flow turbine blade.

The casting of the radial flow turbine blade may also include removing the refractory metal core to form the internal cooling passage.

The radial flow turbine blade may be cast without use of a ceramic core.

The internal cooling passage may extend longitudinally along a longitudinal centerline. The passage thickness may remain constant as the internal cooling passage extends longitudinally along at least a portion of the longitudinal centerline.

The internal cooling passage may extend longitudinally along a longitudinal centerline. The passage thickness may increase as the internal cooling passage extends longitudinally along at least a portion of the longitudinal centerline.

The internal cooling passage may extend longitudinally along a longitudinal centerline. The passage thickness may fluctuate as the internal cooling passage extends longitudinally along at least a portion of the longitudinal centerline.

The radial flow turbine blade may also include one or more outlets at a tip of the radial flow turbine blade. The one or more outlets may be fluidly coupled with the internal cooling passage.

The radial flow turbine blade may also include one or more outlets at a leading edge or a trailing edge of the radial flow turbine blade. The one or more outlets may be fluidly coupled with the internal cooling passage.

The radial flow turbine blade may also include one or more outlets. The one or more outlets may be fluidly coupled with the internal cooling passage. The one or more outlets may be formed by a casting core during the forming of the radial flow turbine blade.

The manufacturing method may also include forming the radial flow turbine rotor as a monolithic body. The radial flow turbine rotor may be configured as or otherwise include the radial flow turbine blade.

The present disclosure may include any one or more of the individual features disclosed above and/or below alone or in any combination thereof.

The foregoing features and the operation of the invention will become more apparent in light of the following description and the accompanying drawings.

The following numbered clauses define aspects and embodiments of the invention that are disclosed, but not presently claimed:
1. A manufacturing method, comprising:
   forming a radial flow turbine blade of a radial flow turbine rotor for a gas turbine engine;
   wherein the radial flow turbine blade comprises an internal cooling passage, and at least a portion of the internal cooling passage has a passage thickness of less than 20 mils (0.51mm).
2. The manufacturing method of clause 1, wherein the internal cooling passage extends within at least a portion of the radial flow turbine blade with a blade thickness of less than 60 mils (1.5mm).
3. The manufacturing method of clauses 1 or 2, wherein the blade thickness is between 30 mils (0.76mm) and 60 mils (1.5mm), and/or wherein the passage thickness is between 5 mils (0.13mm) and 15 mils (0.38mm).
4. The manufacturing method of clauses 1 to 3, wherein the forming of the radial flow turbine blade comprises casting the radial flow turbine blade with the internal cooling passage.
5. The manufacturing method of clause 4, wherein the casting of the radial flow turbine blade comprises:
   configuring a refractory metal core (RMC) within a shell; and
   filling a void between the refractory metal core (RMC) and the shell to at least partially form the radial flow turbine blade.
6. The manufacturing method of clause 5, wherein the casting of the radial flow turbine blade further comprises removing the refractory metal core (RMC) to form the internal cooling passage.
7. The manufacturing method of clauses 5 or 6, wherein the radial flow turbine blade is cast without use of a ceramic core.
8. The manufacturing method of any preceding clause, wherein the internal cooling passage extends longitudinally along a longitudinal centerline, and the passage thickness remains constant as the internal cooling passage extends longitudinally along at least a portion of the longitudinal centerline.
9. The manufacturing method of any preceding clause, wherein the internal cooling passage extends longitudinally along a longitudinal centerline, and as the internal cooling passage extends longitudinally along at least a portion of the longitudinal centerline the passage thickness increases or fluctuates..
10. The manufacturing method of any preceding clause, wherein the radial flow turbine blade further comprises one or more of:
   one or more outlets at a leading edge or a trailing edge of the radial flow turbine blade, and the one or more outlets are fluidly coupled with the internal cooling passage;
   one or more outlets at a tip of the radial flow turbine blade, and the one or more outlets are fluidly coupled with the internal cooling passage;
   one or more outlets the one or more outlets are fluidly coupled with the internal cooling passage and the one or more outlets are formed by a casting core during the forming of the radial flow turbine blade.
11. The manufacturing method of any preceding clause, further comprising:
   forming the radial flow turbine rotor as a monolithic body;
   wherein the radial flow turbine rotor comprises the radial flow turbine blade.
12. A manufacturing method, comprising:
   providing a refractory metal core (RMC);
   configuring the refractory metal core (RMC) within a shell;
   directing liquid material into a void between the shell and the refractory metal core (RMC) to at least partially form a radial flow turbine blade for a radial flow turbine rotor in a gas turbine engine; and
   removing the refractory metal core (RMC) from the radial flow turbine blade to form an internal cooling passage within the radial flow turbine blade.
13. The manufacturing method of clause 12, wherein at least a portion of the internal cooling passage has a passage thickness of less than 15 mils (0.38mm).
14. A radial flow turbine rotor for a radial flow turbine of a gas turbine engine, the radial flow turbine rotor comprising:
   a rotor hub; and
   a plurality of radial flow turbine blades arranged circumferentially about and connected to the rotor hub, the plurality of radial flow turbine blades comprising a first radial flow turbine blade;
   the first radial flow turbine blade comprising an internal cooling passage, and at least a portion of the internal cooling passage has a passage thickness of less than 20 mils (0.51mm).
15. The radial flow turbine rotor of clause 14, wherein:
   the rotor hub and the plurality of radial flow turbine blades are formed together as a monolithic body; and/or
   the internal cooling passage extends within at least a portion of the first radial flow turbine blade with a blade thickness between 30 mils (0.76mm) and 60 mils (1.5mm).

### BRIEF DESCRIPTION OF THE DRAWINGS

FIG. 1 is a partial, sectional schematic illustration of a gas turbine engine.
FIG. 2 is a perspective illustration of a radial flow turbine rotor.
FIG. 3 is a partial, sectional schematic illustration of the turbine rotor taken along a plane adjacent a radial flow turbine blade.
FIG. 4 is a partial, sectional schematic illustration of the turbine rotor taken along a plane through the turbine blade.
FIG. 5 is a partial, sectional schematic illustration of the turbine rotor taken along line 5-5 in FIG. 4.
FIG. 6 is a sectional schematic illustration of a portion of the turbine blade.
FIG. 7 is a flow diagram of a manufacturing method.
FIG. 8 is a sectional schematic illustration of a casting core.
FIG. 9 is a sectional schematic illustration of a casting mold.
FIG. 10 is a sectional schematic illustration of the casting mold filled with turbine blade material.
FIG. 11 is a sectional schematic illustration of a turbine blade preform.
FIG. 12 is a sectional schematic illustration of a portion of the casting core configured with one or more protrusions.
FIGS. 13A-C are schematic illustrations of the turbine blade with various different internal cooling passage configurations.

### DETAILED DESCRIPTION

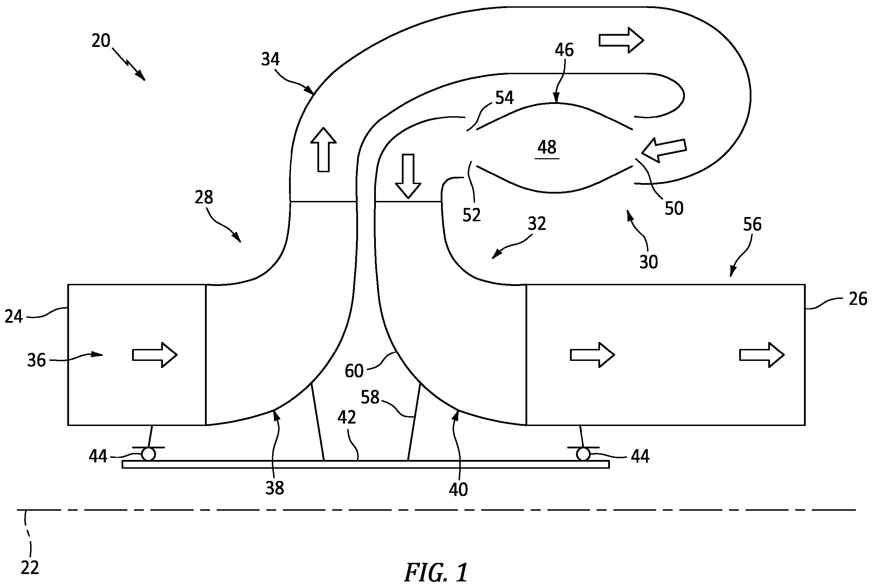

FIG. 1 is a partial, sectional schematic illustration of a gas turbine engine 20. This gas turbine engine 20 of FIG. 1 is a single spool, radial flow gas turbine engine. The gas turbine engine 20 may be configured as an auxiliary power unit (APU), a supplemental power unit (SPU) or a primary power unit (PPU) for generating shaft power, electrical power, bleed flow, or other uses for an aircraft. The gas turbine engine 20 may alternatively be configured as a turbojet gas turbine engine, a turboshaft gas turbine engine, a turboprop gas turbine engine or any other type of gas turbine engine that generates thrust for propelling the aircraft during flight. The present disclosure, however, is not limited to such an exemplary gas turbine engine nor to aircraft propulsion system applications. For example, the gas turbine engine 20 may alternatively include more than one spool and/or be configured in a land based gas turbine engine configured for electrical power generation, an air power generation unit for air mobility, a hybrid power architecture unit, etc.

The gas turbine engine 20 of FIG. 1 extends axially along an axial centerline 22 between a forward, upstream airflow inlet 24 and an aft, downstream airflow exhaust 26. This axial centerline 22 may also be a rotational axis for various components within the gas turbine engine 20.

The gas turbine engine 20 includes a compressor section 28, a combustor section 30 and a turbine section 32. The gas turbine engine 20 also includes a static engine structure 34. This static engine structure 34 houses the compressor section 28, the combustor section 30 and the turbine section 32. The static engine structure 34 of FIG. 1 also forms the airflow inlet 24 and the airflow exhaust 26.

The engine sections 28, 30 and 32 are arranged sequentially along a (e.g., annular) core flowpath 36 that extends through the gas turbine engine 20 from the airflow inlet 24 to the airflow exhaust 26. The compressor section 28 and the turbine section 32 each include a respective rotor 38 and 40. Each of these rotors 38, 40 includes a plurality of rotor blades arranged circumferentially around and connected to at least one respective rotor disk. The rotor blades, for example, may be formed integral with or mechanically fastened, welded, brazed, adhered and/or otherwise attached to the respective rotor disk(s).

The compressor rotor 38 of FIG. 1 is configured as a radial flow compressor rotor, which may also be referred to as a radial outflow compressor rotor. The compressor rotor 38 of FIG. 1, for example, is configured to receive an axial inflow and provide a radial outflow. The compressor rotor 38 of FIG. 1 thereby turns an axial flow radially outward. Similarly, the turbine rotor 40 of FIG. 1 is configured as a radial flow turbine rotor, which may also be referred to as a radial inflow turbine rotor. The turbine rotor 40 of FIG. 1, for example, is configured to receive a radial inflow and provide an axial outflow. The turbine rotor 40 of FIG. 1 thereby turns a radial flow axially aft.

The compressor rotor 38 is connected to the turbine rotor 40 through a shaft 42. This shaft 42 is rotatably supported by the static engine structure 34 through a plurality of bearings 44; e.g., rolling element bearings, thrust bearings, journal bearings, etc.

The combustor section 30 includes a (e.g., annular) combustor 46 with a (e.g., annular) combustion chamber 48. The combustor 46 of FIG. 1 is configured as a reverse flow combustor. Inlets ports into the combustion chamber 48, for example, may be arranged at (e.g., on, adjacent or proximate) and/or towards an aft end 50 of the combustor 46. An outlet 52 from the combustor 46 may be arranged axially aft of an inlet 54 to the turbine section 32. The combustor 46 may also be arranged radially outboard of and/or axially overlap at least a (e.g., aft) portion of the turbine section 32. With this arrangement, the core flowpath 36 of FIG. 1 reverses its directions (e.g., from a forward-to-aft direction to an aft-to-forward direction) a first time as the core flowpath 36 extends into the combustion chamber 48. The core flowpath 36 of FIG. 1 then reverses its direction (e.g., from the aft-to-forward direction to the forward-to-aft direction) a second time as the core flowpath 36 extends from the combustion chamber 48 into the turbine section 32. The present disclosure, however, is not limited to the foregoing exemplary combustor section arrangement.

During operation, air enters the gas turbine engine 20 and, more particularly, the core flowpath 36 through the airflow inlet 24. The air within the core flowpath 36 may be referred to as core air.

The core air is compressed by the compressor rotor 38 and directed into the combustion chamber 48. Fuel is injected via one or more fuel injectors (not shown) and mixed with the compressed core air to provide a fuel-air mixture. This fuel-air mixture is ignited within the combustion chamber 48 via an igniter (not shown), and combustion products thereof flow through the turbine section 32 and cause the turbine rotor 40 to rotate. This rotation of the turbine rotor 40 drives rotation of the compressor rotor 38 and, thus, compression of the air received from the airflow inlet 24. An exhaust section 56 of the gas turbine engine 20 receives the combustion products from the turbine section 32. This exhaust section 56 directs the received combustion products out of the gas turbine engine 20 through the airflow exhaust 26.

Cycle performance of the gas turbine engine 20 may be tied to inlet temperature to the turbine section 32. Generally speaking, increasing the turbine section inlet temperature may facilitate increasing gas turbine engine efficiency and/or power generation. However, typical turbine rotor materials may degrade when subject to relatively high turbine section inlet temperatures. The turbine rotor 40 of the present disclosure therefore is configured with (e.g., active) internal cooling to facilitate provision of higher turbine section inlet temperatures.

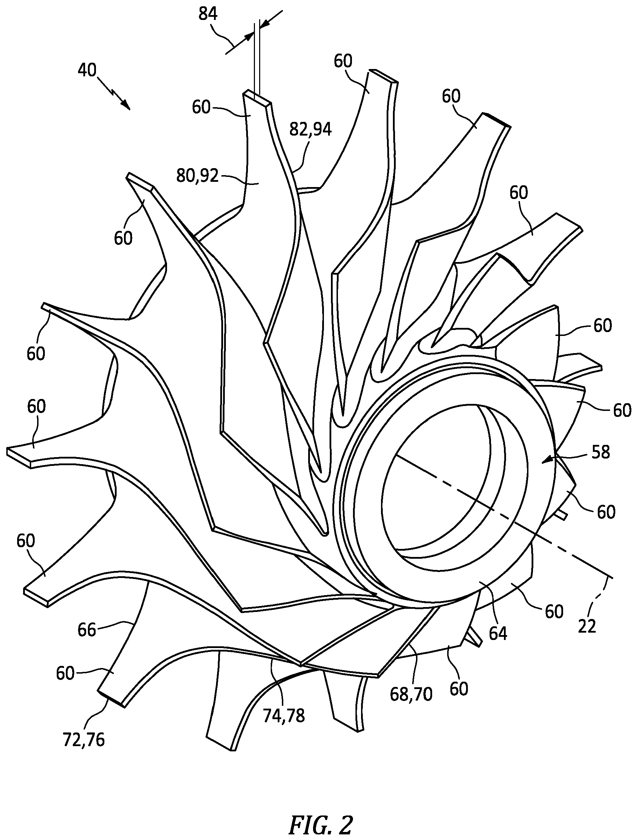

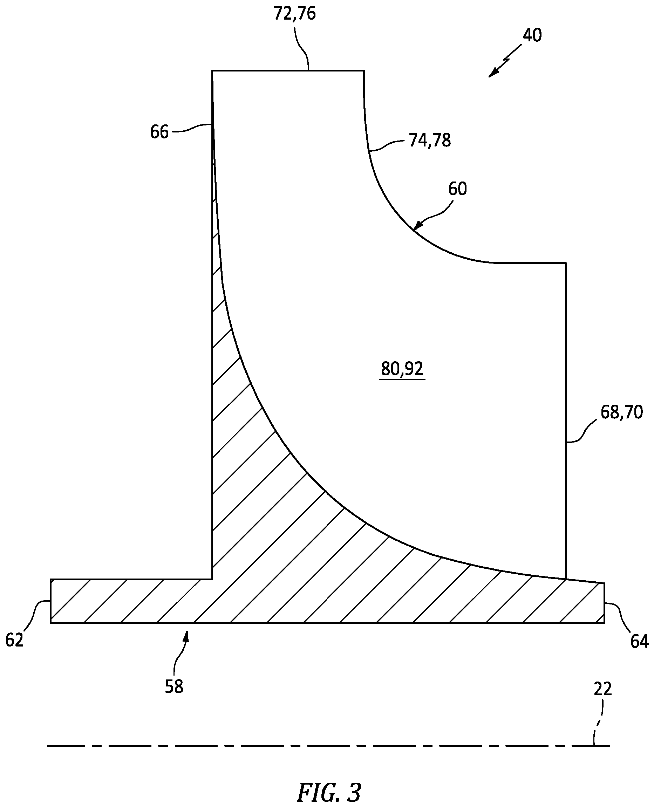

Referring to FIGS. 2 and 3, the turbine rotor 40 includes a turbine rotor hub 58 and a plurality of radial flow (e.g., inflow) turbine blades 60. The turbine rotor 40 of FIGS. 2 and 3 is configured as a monolithic body. The rotor hub 58 and the turbine blades 60, for example, are cast, additively manufactured and/or otherwise formed together as a unitary body. By contrast, a non-monolithic turbine rotor may include discretely formed turbine blades that are bonded and/or otherwise attached to a rotor hub during turbine rotor assembly, or the non-monolithic turbine rotor may be formed from a plurality of discretely formed circumferential rotor segments bonded and/or otherwise attached together during turbine rotor assembly. The present disclosure, however, is not limited to any particular turbine rotor formation techniques nor to monolithic turbine rotors. For example, it is contemplated that some of the teachings herein may also be applied to non-monolithic turbine rotors.

The rotor hub 58 extends axially along the axial centerline 22 between and to an axial forward end 62 (see FIG. 3) of the turbine rotor 40 and an axial aft end 64 of the turbine rotor 40. The rotor hub 58 extends circumferentially about (e.g., completely around) the axial centerline 22, thereby providing the rotor hub 58 with a full-hoop configuration.

The turbine blades 60 are arranged circumferentially about the rotor hub 58 and the axial centerline 22. Each of the turbine blades 60 is connected (e.g., formed integral with) the rotor hub 58. Each of the turbine blades 60 extends axially along the axial centerline 22 (and the rotor hub 58) between and to an axial forward end 66 of the respective turbine blade 60 and an axial aft end 68 of the respective turbine blade 60. The turbine blade aft end 68 may form a trailing edge 70 of the respective turbine blade 60. Each of the turbine blades 60 projects radially out from the rotor hub 58 to a distal radial end 72 of the respective turbine blade 60 and a distal radial side 74 of the respective turbine blade 60. The turbine blade radial end 72 may form a leading edge 76 of the respective turbine blade 60, where this leading edge 76 extends axially between and to the turbine blade forward end 66 and the turbine blade radial side 74. The turbine blade radial side 74 may form a tip 78 of the respective rotor, where this tip 78 extends axially and radially inwards from the turbine blade leading edge 76 to the turbine blade trailing edge 70. The turbine blade trailing edge 70 may extend radially between and to the turbine blade tip 78 and the rotor hub 58.

Referring to FIG. 2, each of the turbine blades 60 has a pressure side 80 (e.g., a concave side) and a suction side 82 (e.g., a convex side). Each of the turbine blades 60 has a lateral thickness 84 that extends between the turbine blade pressure side 80 and the turbine blade suction side 82.

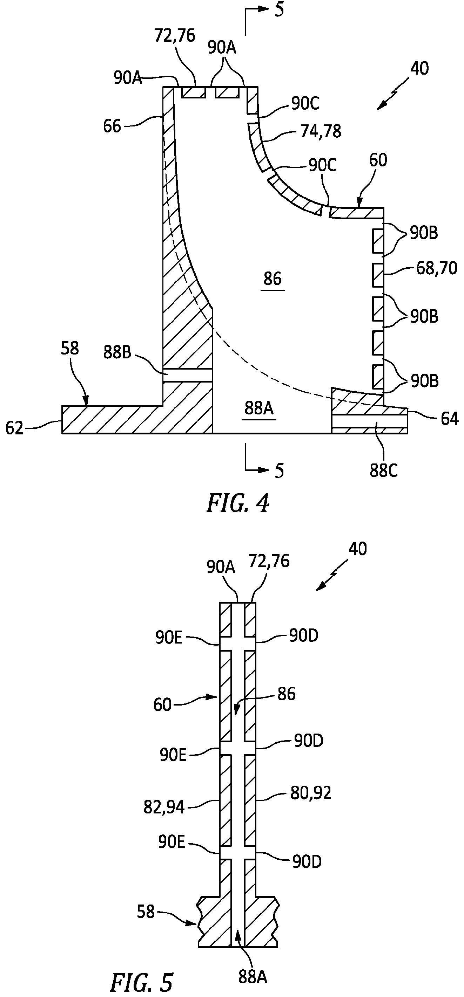

Referring to FIGS. 4 and 5, each of the turbine blades 60 is configured an internal cooling passage 86; e.g., a channel, a bore, etc. This internal cooling passage 86 is fluidly coupled with one or more cooling fluid (e.g., cooling air) root passages 88A-C (generally referred to as "88") within the rotor hub 58, which root passages may include a radial root passage 88A, a forward, upstream axial root passage 88B and/or an aft, downstream axial root passage 88C. The internal cooling passage 86 is configured to direct cooling fluid (e.g., cooling air) within the turbine blade 60 for conductively and/or convectively cooling the turbine blade 60 from within. The internal cooling passage 86 may also be fluidly coupled with one or more cooling outlets 90A-E (generally referred to as "90"); e.g., openings, exits such as, but not limited to, slots, film holes, effusion apertures, etc. These cooling outlets 90 may be configured for forming a protective cooling fluid film along one or more exterior surfaces of the respective turbine blade 60. With such a fluid cooling arrangement, the turbine blade 60 is operable to withstand higher turbine section inlet temperatures than a comparable turbine blade without fluid cooling.

Referring to FIG. 4, one or more of the cooling outlets (e.g., 90A) may be arranged at (e.g., on, adjacent or proximate) and/or along the turbine blade leading edge 76. One or more of the cooling outlets (e.g., 90B) may also or alternatively be arranged at and/or along the turbine blade trailing edge 70. One or more of the cooling outlets (e.g., 90C) may also or alternatively be arranged at and/or along the turbine blade tip 78. Referring to FIG. 5, one or more of the cooling outlets (e.g., 90D) may also or alternatively be arranged at and/or along the turbine blade pressure side 80 and its surface 92. One or more of the cooling outlets (e.g., 90E) may also or alternatively be arranged at and/or along the turbine blade suction side 82 and its surface 94. Of course, in other embodiments, any one or more of the cooling outlets 90A-E may be omitted depending upon the specific cooling requirements for the turbine blade 60.

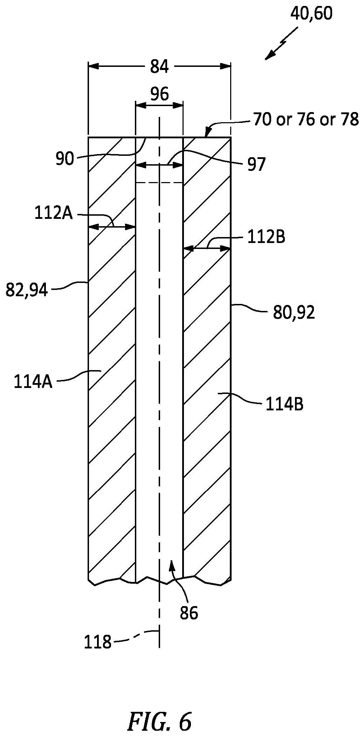

Referring to FIG. 6, the internal cooling passage 86 has a lateral thickness 96 extending between and to opposing sidewalls 114A and 114B (generally referred to as "114) of the turbine blade 60. This passage lateral thickness 96 may be measured in a lateral direction between (e.g., and generally or substantially perpendicular to) the turbine blade pressure side 80 and the turbine blade suction side 82. The passage lateral thickness 96, for example, and the turbine blade lateral thickness 84 may be measured along a common direction, line segment, plane, etc. The passage lateral thickness 96 may not include any added dimension(s) form one or more of the cooling outlets 90 (see FIG. 5); e.g., longitudinal length(s) of the cooling outlet(s) 90 through the sidewall(s) 114 where the outlet(s) 90 are perpendicular to the cooling passage 86; e.g., see 90D and 90E in FIG. 5.

The passage lateral thickness 96 of at least a portion or an entirety of the internal cooling passage 86 may be sized relatively small. The passage lateral thickness 96 at the turbine blade leading edge 76, the turbine blade trailing edge 70 and/or the turbine blade tip 78, for example, may be less than twenty mils (0.02 inches) (0.51mm); e.g., less than 15 mils (0.015 inches) (0.38mm). The passage lateral thickness 96, for example, may be between five mils (0.005 inches) (0.13mm) and fifteen mils (0.015 inches) (0.38mm). The present disclosure, however, is not limited to such exemplary dimensions. For example, in other embodiments, the passage lateral thickness 96 of at the turbine blade leading edge 76, the turbine blade trailing edge 70 and/or the turbine blade tip 78 may be greater than twenty mils (0.02 inches) (0.51mm) depending, for example, on the turbine section inlet temperature and aerodynamic performance.

Generally speaking, the smaller the dimensions (e.g., the lateral thickness 96) of the internal cooling passage 86, the less cooling fluid (e.g., compressed air) is required and taken away from other gas turbine engine cooling requirements and/or bled form the core air flow. In addition, the smaller the dimensions (e.g., the lateral thickness 96) of the internal cooling passage 86, the thinner the respective turbine blade 60 can be sized. Providing thinner turbine blades 60 may facilitate reduced turbine rotor rotating mass, material costs, turbine section size requirements, improved aerodynamic performance, etc.

Each of the cooling outlets 90 (see also FIG. 5) also has a lateral thickness 97, which is measured perpendicular to a longitudinal axis of the respective cooling outlet 90. This lateral thickness 97 may be equal to or different (e.g., smaller) than the turbine blade lateral thickness 84.

Referring to FIG. 6, the turbine blade lateral thickness 84 of at least a portion or an entirety of the respective turbine blade 60 may be sized relatively small, particularly given the relatively small passage lateral thickness 96 for example. The turbine blade lateral thickness 84 at the turbine blade leading edge 76, the turbine blade trailing edge 70 and/or the turbine blade tip 78, for example, may be less than fifty or sixty mils (0.05 - 0.06 inches) (1.3mm-1.5mm); e.g., less than 40 mils (0.04 inches) (1.0mm). The turbine blade lateral thickness 84, for example, may be between thirty mils (0.03 inches) (0.76mm) and sixty mils (0.06 inches) (1.5mm). The present disclosure, however, is not limited to such exemplary dimensions. For example, in other embodiments, the turbine blade lateral thickness 84 at the turbine blade leading edge 76, the turbine blade trailing edge 70 and/or the turbine blade tip 78 may be greater than sixty mils (0.06 inches) (1.5mm) or less than thirty mils (0.03 inches) (0.76mm) depending, for example, on a size / capacity of the turbine section 32.

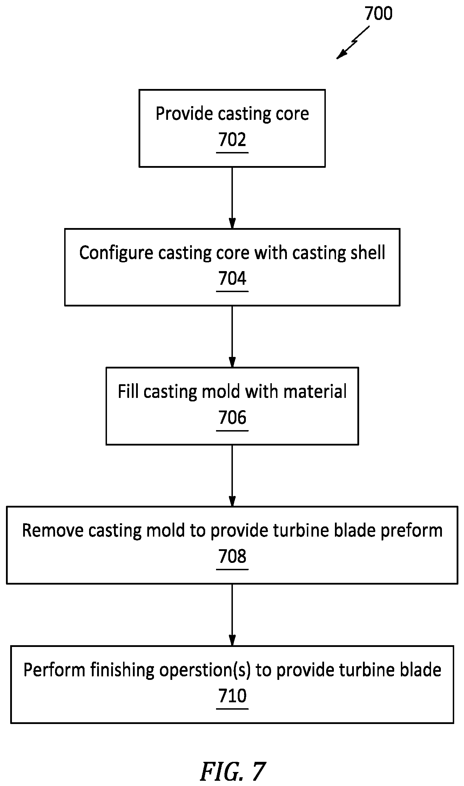

FIG. 7 is a flow diagram of a method 700 for manufacturing at least a radial flow turbine blade. For ease of description, the method 700 is described with reference to the radial flow turbine blade 60 described above. The method 700 of the present disclosure, however, is not limited to manufacturing any particular radial flow turbine blades.

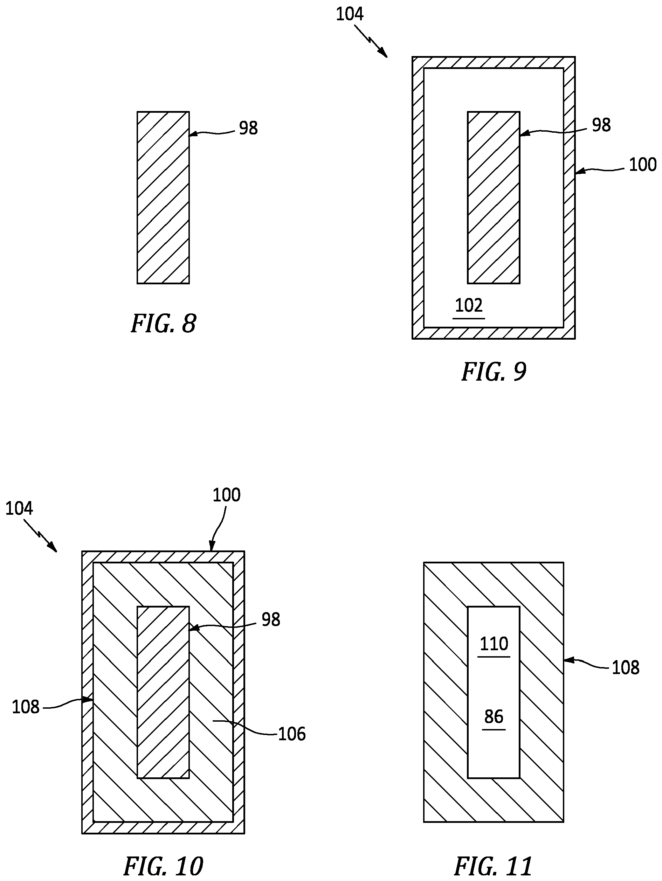

In step 702, a casting core 98 is provided as shown, for example, in FIG. 8. This casting core 98 may be configured as a refractory metal core (RMC). The casting core 98, for example, may be constructed (e.g., only) from a refractory metal (e.g., in a bulk or sheet metal form) such as, but not limited to, molybdenum, tantalum, niobium, tungsten, and alloys thereof. For purposes of this disclosure, the term "refractory metal" may also include intermetallic compounds based on one or more of the foregoing refractory metals. Refractory metals may be prone to oxidization at elevated temperatures and/or may also be somewhat soluble in molten superalloys. Accordingly, a refractory metal core may include a protective coating to prevent oxidation and/or erosion by molten metal during the casting process. A refractory metal core element, for example, can be coated with one or more thin continuous adherent ceramic layers for protection. Examples of such ceramics include, but are not limited to, silica, alumina, zirconia, chromia, mullite and hafnia. A coefficient of thermal expansion (C.T.E.) of the refractory metal and the ceramic may be similar. The ceramic layer(s) may be applied by chemical vapor deposition (CVD), physical vapor deposition (PVD), electrophoresis and/or sol gel techniques; however, the present disclosure is not limited thereto.

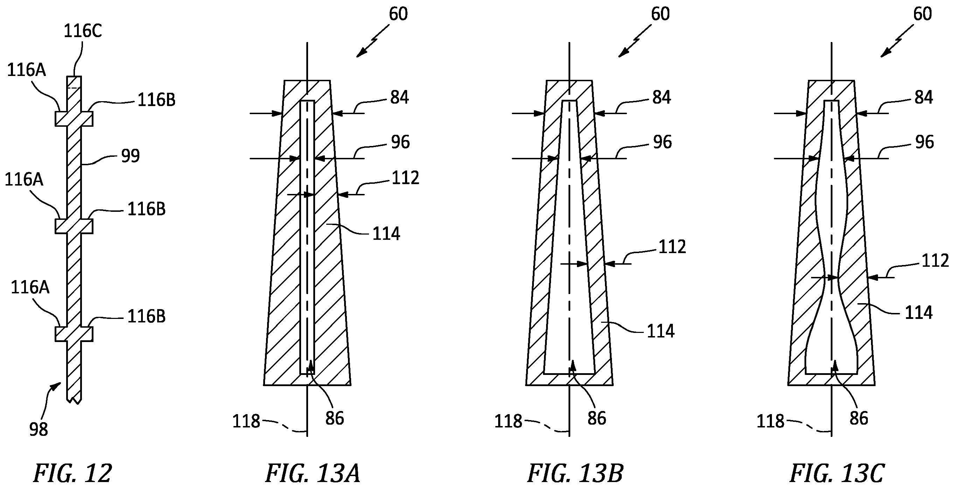

The refectory metal is relatively ductile and, thus, facilitates formation of relatively thin casting cores. For example, when constructed from the refractory metal, at least a portion or an entirety of a base 99 (e.g., see FIG. 12) of the casting core 98 (or the entire casting core 98) may have a lateral thickness of less than twenty mils (0.02 inches) (0.51mm); e.g., between five mils (0.005 inches)(0.13mm) and fifteen mils (0.015 inches) (0.38mm). By contrast, given a brittle nature of ceramic material, a typically minimum dimension for a ceramic casting core is greater than twenty-five to thirty mils (0.025-0.03 inches) (0.64-0.76mm). Thus, in some embodiments, the method 700 may be performed without use of a ceramic casting core.

In step 704, the casting core 98 is configured with a casting shell 100 as shown, for example, in FIG. 9. The casting core 98, for example, may be formed in a wax body to provide a casting fixture, which casting fixture has the configuration of the turbine blade 60 to be manufactured. Ceramic material may be built up over the casting fixture so as to form the casting shell 100. The wax body material may then be melted and removed from the casting shell 100 so as to leave a void 102 (e.g., cavity) between the inner casting core 98 (the RMC) and the outer casting shell 100. This combination of at least the casting core 98 and the casting shell 100 provides a casting mold 104 for the turbine blade 60 to be formed. Of course, various other methods are known in the art for configuring a casting core within a casting shell, and the present disclosure is not limited to any particular ones thereof.

In step 706, the casting mold 104 is filled with turbine blade material 106 as shown, for example, in FIG. 10. Molten metal, for example, may be directed into the void 102 (see FIG. 9) so as to at least partially or completely fill the void 102. The molten metal is then cooled so as to form a turbine blade preform 108.

In step 708, the casting mold 104 is removed to provide the turbine blade preform 108 as shown, for example, in FIG. 11. The casting shell 100, for example, may be removed (e.g., broken and/or dissolved) from an exterior of the turbine blade preform 108. The casting core 98 may be removed from (e.g., melted, leached, or acid etched and directed out of) an interior of the turbine blade preform 108. The removal of the casting core 98 from turbine blade preform 108 leaves an empty space 110 within the turbine blade 60 which may at least partially or completely form the interior cooling passage 86.

In step 710, one or more finishing operations may be performed to the turbine blade preform 108 to provide the turbine blade 60. Examples of such finishing operations include, but are not limited to, machining, polishing, surface treating, coating, etc. Of course, depending upon the casting techniques and as-cast finishes, the finishing step 710 may be omitted where the turbine blade 60 is an as-cast body.

In some embodiments, one or more of the cooling outlets 90 (see FIGS. 4-6) may be formed in the turbine blade 60 via a machining (e.g., drilling) operation during the finishing step 710. However, where a lateral wall thickness 112A, 112B (generally referred to as "112") (see FIG. 6) of the turbine blade 60 is relatively small, such machining operations may cause damage to the sidewall 114A, 114B of the turbine blade 60. In some embodiments therefore, referring to FIG. 12, the casting core 98 (e.g., the RMC) may include one or more (e.g., integral or added) protrusions (e.g., 116A-C; generally referred to as "116") which provide negatives of one or more of the cooling outlets 90 (see FIGS. 4-6). Each of these protrusions 116 projects out from the casting core base 99. Thus, when the casting core 98 is removed from the turbine blade preform 108 (or the as-cast turbine blade), the voids left behind by the protrusions 116 may form the respective cooling outlets 90 without, for example, the need for further machining to form the cooling outlets 90. The protrusions 116 may also or alternatively provide locating features for the casting core 98 when configured within the casting shell 100.

In some embodiments, the method 700 may be performed to form more than one of the turbine blades 60 (e.g., each of the turbine blades 60) and/or at least a portion or an entirety of the rotor hub 58. The method 700, for example, may be performed to form (e.g., cast) the entire turbine rotor 40 as a single monolithic body.

In some embodiments, referring to FIG. 13A, the passage lateral thickness 96 may remain constant (e.g., the same) as at least a portion or an entirety of the internal cooling passage 86 extends longitudinally along its longitudinal centerline 118. In some embodiments, referring to FIG. 13B, the passage lateral thickness 96 may taper (e.g., intermittently or steadily decrease) as at least a portion or the entirety of the internal cooling passage 86 extends longitudinally along its longitudinal centerline 118. In some embodiments, referring to FIG. 13C, the passage lateral thickness 96 may fluctuate (e.g., increase and then decrease and/or vice versa) as at least a portion or the entirety of the internal cooling passage 86 extends longitudinally along its longitudinal centerline 118. With such configuration, the internal fluid cooling may be tuned within the respective turbine blade 60 such that, for example, hot spots receive additional fluid cooling.

In some embodiments, referring to FIG. 13B, the lateral wall thickness 112 may remain constant (e.g., the same) as at least a portion or an entirety of the sidewall 114 extends along the internal cooling passage 86. In some embodiments, referring to FIG. 13A, the lateral wall thickness 112 may taper (e.g., intermittently or steadily decrease) as at least a portion or an entirety of the sidewall 114 extends along the internal cooling passage 86. In some embodiments, referring to FIG. 13C, the lateral wall thickness 112 may fluctuate (e.g., increase and then decrease and/or vice versa) as at least a portion or an entirety of the sidewall 114 extends along the internal cooling passage 86.

While certain exemplary combinations of constant, tapering and fluctuating passage lateral thicknesses 96 and lateral wall thicknesses 112 are shown in FIGS. 13A-C, it is contemplated these various different thickness characteristics may be mixed and matched in alternative combinations. For example, while the passage lateral thickness 96 is constant, the lateral wall thickness 112 may also or alternatively be constant and/or fluctuate. In another example, while the passage lateral thickness 96 is tapered, the lateral wall thickness 112 may also or alternatively be tapered and/or fluctuate. In another example, while the passage lateral thickness 96 fluctuates, the lateral wall thickness 112 may also or alternatively be constant and/or tapered.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A manufacturing method, comprising:
providing a refractory metal core (RMC);
configuring the refractory metal core (RMC) within a shell (100);
directing liquid material into a void (102) between the shell (100) and the refractory metal core (RMC) to at least partially form a radial flow turbine blade (60) for a radial flow turbine rotor (40) in a gas turbine engine (20); and
removing the refractory metal core (RMC) from the radial flow turbine blade (60) to form an internal cooling passage (86) within the radial flow turbine blade (60).

2. The manufacturing method of claim 1, wherein at least a portion of the internal cooling passage (86) has a passage thickness of less than 15 mils (0.38mm).

3. A manufacturing method, comprising:
forming a radial flow turbine blade (60) of a radial flow turbine rotor (40) for a gas turbine engine (20);
wherein the radial flow turbine blade (60) comprises an internal cooling passage (86), and at least a portion of the internal cooling passage (86) has a passage thickness of less than 20 mils (0.51mm).

4. The manufacturing method of claim 1, 2 or 3, wherein the internal cooling passage (86) extends within at least a portion of the radial flow turbine blade (60) with a blade thickness of less than 60 mils (1.5mm).

5. The manufacturing method of claim 4, wherein the blade thickness is between 30 mils (0.76mm) and 60 mils (1.5mm), and/or wherein the passage thickness is between 5 mils (0.13mm) and 15 mils (0.38mm).

6. The manufacturing method of claim 3 or claim 4 or 5 when dependent on claim 3, wherein the forming of the radial flow turbine blade (60) comprises casting the radial flow turbine blade (60) with the internal cooling passage (86).

7. The manufacturing method of claim 6, wherein the casting of the radial flow turbine blade (60) comprises:
configuring a refractory metal core (RMC) within a shell (100); and
filling a void (102) between the refractory metal core (RMC) and the shell (100) to at least partially form the radial flow turbine blade (60).

8. The manufacturing method of claim 7, wherein the casting of the radial flow turbine blade (60) further comprises removing the refractory metal core (RMC) to form the internal cooling passage (86).

9. The manufacturing method of any of claims 1, 2, 6, 7 or 8, wherein the radial flow turbine blade (60) is cast without use of a ceramic core.

10. The manufacturing method of any of claims 2 to 9, wherein the internal cooling passage extends longitudinally along a longitudinal centerline, and the passage thickness remains constant as the internal cooling passage extends longitudinally along at least a portion of the longitudinal centerline.

11. The manufacturing method of any of claims 2 to 10, wherein the internal cooling passage extends longitudinally along a longitudinal centerline, and as the internal cooling passage extends longitudinally along at least a portion of the longitudinal centerline the passage thickness increases or fluctuates.

12. The manufacturing method of any preceding claim, wherein the radial flow turbine blade (60) further comprises one or more of:
one or more outlets at a leading edge or a trailing edge of the radial flow turbine blade, and the one or more outlets are fluidly coupled with the internal cooling passage;
one or more outlets at a tip of the radial flow turbine blade (60), and the one or more outlets are fluidly coupled with the internal cooling passage (86);
one or more outlets the one or more outlets are fluidly coupled with the internal cooling passage (86) and the one or more outlets are formed by a casting core (98) during the forming of the radial flow turbine blade (60).

13. The manufacturing method of any preceding claim, further comprising:
forming the radial flow turbine rotor (40) as a monolithic body;
wherein the radial flow turbine rotor (40) comprises the radial flow turbine blade (60).

14. A radial flow turbine rotor (40) for a radial flow turbine of a gas turbine engine (20), the radial flow turbine rotor (40) comprising:
a rotor hub (58); and
a plurality of radial flow turbine blades (60) arranged circumferentially about and connected to the rotor hub (58), the plurality of radial flow turbine blades (60) comprising a first radial flow turbine blade (60);
the first radial flow turbine blade (60) comprising an internal cooling passage (86), and at least a portion of the internal cooling passage (86) has a passage thickness of less than 20 mils (0.51mm).

15. The radial flow turbine rotor (40) of claim 14, wherein:
the rotor hub (58) and the plurality of radial flow turbine blades (60) are formed together as a monolithic body; and/or
the internal cooling passage (86) extends within at least a portion of the first radial flow turbine blade (60) with a blade thickness between 30 mils (0.76mm) and 60 mils (1.5mm).
